# EUROPÄISCHE PATENTSCHRIFT

(11) **EP 2 504 608 B1**
(45) Veröffentlichungstag und Bekanntmachung des Hinweises auf die Patenterteilung: **26.02.2014**
(21) Anmeldenummer: 09760752.7
(22) Anmeldetag: 23.11.2009
(51) Int. Cl.: F16H 57/02, F16H 57/04

(54) **ENTLÜFTUNGSANORDNUNG UND GETRIEBEANORDNUNG MIT EINER SOLCHEN ENTLÜFTUNGSANORDNUNG**
VENTILATION SYSTEM AND GEAR SYSTEM COMPRISING SUCH A VENTILATION SYSTEM
ENSEMBLE D'ÉVACUATION DE L'AIR ET ENSEMBLE DE TRANSMISSION MUNIE D'UN TEL ENSEMBLE D'ÉVACUATION DE L'AIR

(43) Veröffentlichungstag der Anmeldung: 03.10.2012
(73) Patentinhaber: GKN Driveline International GmbH, 53797 Lohmar (DE)
(72) Erfinder: ENGELMANN, Michael, 53757 Sankt Augustin (DE); SCHÄFER, Ralf, 51109 Köln (DE); MÜLLER, Kurt, 52399 Merzenich (DE)
(74) Vertreter: Oberwalleney, Stephan
(86) Internationale Anmeldenummer: PCT/EP2009/008314
(87) Internationale Veröffentlichungsnummer: WO 2011/060806

(56) Entgegenhaltungen:
- EP-A2- 0 350 126
- DE-A1- 19 945 897
- DE-C- 828 184
- GB-A- 2 260 503
- JP-U- 5 032 863
- US-A- 3 145 582

## Beschreibung

Die Erfindung betrifft eine Entlüftungsanordnung für eine Baugruppe mit in Schmiermittel laufenden Bauteilen, welche mittels eines Wälzlagers drehbar gelagert sind, insbesondere für ein Getriebe im Antriebsstrang eines Kraftfahrzeugs. Derartige Entlüftungsanordnungen dienen dazu, einen erhöhten Innendruck der Baugruppe in die Atmosphäre abgeben zu können, wobei gleichzeitig ein Auslaufen von Schmiermittel bzw. ein Eindringen von Fremdstoffen vermieden werden soll.

Aus der gattungsbildenden US 3 145 582 ist ein Verteilergetriebe mit einer Entlüftungsanordnung bekannt. Das Verteilergetriebe weist eine Eingangswelle und eine hierzu parallele Ausgangswelle auf, die in einem Getriebegehäuse drehbar gelagert sind. Im Bereich der höchsten Stelle des Wälzlagers für die Ausgangswelle befindet sich die Öffnung einer Lüftungsanordnung.

Aus der EP 0 350 126 A2 ist ein landwirtschaftliches Gerät mit einem in einem Rahmen aufgenommenen Getriebe bekannt. Es sind mehrere Arbeitsglieder vorgesehen, die jeweils über eine Welle drehend angetrieben werden. Die Wellen sind über Wälzlager in einem Gehäuse gelagert. Im Bereich eines der Wälzlager ist ein Entlüftungsventil vorgesehen. Die Achse des Wälzlagers und das Entlüftungsventil liegen in einer gemeinsamen Vertikalebene.

Aus der DE 199 45 897 A1 ist ein Getriebe-Entlüftungsaufbau für ein Verteilergetriebe bekannt. Das Verteilergetriebe umfaßt ein Gehäuse, in dem eine Eingangswelle mittels eines Lagers drehbar gelagert ist. Axial benachbart zum Lager ist eine Dichtung angeordnet, welche den Ringraum zwischen der Eingangswelle und dem Gehäuse abdichtet. Zwischen dem Lager und der Dichtung ist ein Entlüftungsraum vorgesehen, welcher erhöhten Druck im Verteilergetriebe reduzieren soll.

Generell gestaltet sich die Ausgestaltung und Anordnung einer geeigneten Getriebeentlüftung aufgrund von Bauraumverhältnisse als schwierig, insbesondere vor dem Hintergrund der allgemeinen Forderung nach einem kompakten und leichten Aufbau für Baugruppen im Antriebsstrang eines Kraftfahrzeugs.

Der vorliegenden Erfindung liegt die Aufgabe zugrunde, eine Entlüftungsanordnung für eine Baugruppe mit in Schmiermittel laufenden Bauteilen, die mittels eines oder mehreren Wälzlagern drehbar gelagert sind, insbesondere im Antriebsstrang eines Kraftfahrzeugs, vorzuschlagen, die bei geringem Bauraum eine gute Entlüftung ermöglicht, den Austritt von Schmiermittel aus dem Innenraum des Getriebes verhindert und die einfach aufgebaut ist. Die Aufgabe besteht weiter darin, eine Getriebeanordnung mit einer solchen Entlüftungsanordnung vorzuschlagen.

Die Lösung besteht in einer Entlüftungsanordnung für eine Baugruppe mit in Schmiermittel laufenden Bauteilen, umfassend ein Gehäuseteil; ein drehendes Bauteil, das mittels eines Wälzlagers um eine Drehachse A zumindest mittelbar gegenüber dem Gehäuseteil drehbar gelagert ist; und einen Entlüftungskanal zum Entlüften der Baugruppe, wobei eine innere Mündung des Entlüftungskanals axial benachbart zum Wälzlager angeordnet ist, und wobei die Mündung des Entlüftungskanals das Wälzlager in Axialansicht zumindest teilweise überdeckt, wobei das Wälzlager eine vertikale erste Mittelebene durch die Drehachse A aufweist und wobei die innere Mündung eine vertikale zweite Mittelebene aufweist, wobei die vertikale zweite Mittelebene gegenüber der vertikalen ersten Mittelebene des Wälzlagers versetzt angeordnet ist.

Der Vorteil der erfindungsgemäßen Entlüftungsanordnung besteht darin, daß das Wälzlager des drehenden Bauteils dazu genutzt wird, eine Pumpwirkung zur Förderung des Schmiermittels zu erzeugen. Bei Betrieb der Baugruppe, welche in Schmiermittel rotierende Bauteile umfaßt, kann es insbesondere bei hohen Drehzahlen zu einer Schaumbildung und demzufolge einem Aufsteigen des Schmiermittels in den Entlüftungskanal kommen. Aufgrund der Anordnung der Mündung des Entlüftungskanals im Überdeckungsbereich zu dem Wälzlager wird bei Rotation des Wälzlagers Schmiermittel aus dem Mündungsbereich nach unten bzw. in das Innere der Baugruppe weggefördert. Auf diese Weise wird verhindert, daß Schmiermittel in ungewünschter Weise aus dem Inneren der Baugruppe nach außen gelangt. Ein weiterer Effekt ist, daß das im Entlüftungskanal befindliche Schmiermittel durch die rotierenden Teile des Wälzlagers einen Drall erfährt, welcher zu einer Reduktion der Schaumbildung des Schmiermittels in diesem Bereich führt. Außerdem verhindert die erfindungsgemäße Entlüftungsanordnung das Austreten von Schmiermittel auch unter extremen Einsatzbedingungen der Baugruppe.

Es versteht sich, daß das Wälzlager beliebig entsprechend den Anforderungen an die Lagerung des drehenden Bauteils ausgeführt sein kann. Besonders eignet sich ein Rillenkugellager oder ein Schrägkugellager, wobei andere Lager wie Kegelrollenlager oder dergleichen nicht ausgeschlossen sind. Das drehende Bauteil kann beispielsweise eine Antriebswelle oder ein Wellenzapfen in einem Getriebe sein. Als Schmiermittel kann prinzipiell jedes Mittel verwendet werden, das dazu geeignet ist, die drehenden Bauteile zu kühlen und zu schmieren, beispielsweise Öl.

Mit zumindest teilweiser Überdeckung der Mündung mit dem Wälzlager ist im Sinne der Erfindung gemeint, daß das Wälzlager in Axialansicht eine gedachte Ringfläche definiert und daß die Mündung in Axialansicht eine gedachte Mündungsfläche definiert, wobei die Mündungsfläche und die Ringfläche in Axialansicht gemeinsam eine Schnittfläche bilden. Diese kann auch als Überdeckungsfläche bezeichnet werden.

Mit innerer Mündung ist gemeint, daß diese dem Innenraum der Baugruppe zugewandt ist, während die entgegengesetzte äußere Mündung des Entlüftungskanals in die Umgebung mündet. Der Entlüftungskanal verbindet somit den Innenraum der Baugruppe mit der Umgebung. So kann ein in der Baugruppe bei Betrieb aufgrund von Wärme entstehender Überdruck durch die äußere Mündung des Entlüftungskanals in die Umgebung entweichen. Umgekehrt, kann bei Betriebsstopp der Baugruppe und damit verbundener Abkühlung Luft aus der Umgebung in das Innere der Baugruppe einströmen.

Nach einer bevorzugten Ausgestaltung weist das Gehäuseteil zumindest einen Abschnitt auf, welcher in montiertem Zustand eine seitliche Wandung der Baugruppe bildet. Hierdurch wird ein einfacher und kompakter Aufbau der Entlüftungsanordnung erreicht. Vorzugsweise ist das Gehäuseteil mit Entlüftungskanal zumindest teilweise an ein Gehäuse der Baugruppe angeformt, insbesondere einteilig mit dem Gehäuse ausgebildet. Hierdurch ergibt sich ein einfacher und kompakter Aufbau der Entlüftungsanordnung.

Das drehende Bauteil weist benachbart zum Wälzlager eine Stirnseite auf, die einem Wandungsabschnitt des Gehäuseteils gegenüberliegt. Damit ist die Stirnseite des drehenden Bauteils gemeint, die in der Nähe des Wälzlagers liegt. Für einen kompakten Aufbau und eine gute Schmiermittelförderung ist es günstig, wenn zwischen der Stirnseite des drehenden Bauteil und dem Gehäuseteil ein möglichst kleiner axialer Spalt gebildet ist, wobei die axiale Breite des Spalts vorzugsweise kleiner als die axiale Breite des Wälzlagers ist, insbesondere kleiner als die halbe axiale Breite des Wälzlagers ist.

In dem Ringabschnitt des Wälzlagers, der nicht in Überdeckung mit der Mündung liegt, ist das Wälzlager dem Wandungsabschnitt des Gehäuseteils unmittelbar axial benachbart angeordnet. Das heißt, in dem Bereich der Überdeckung der Mündung mit dem Wälzlager ist ein gewisser Mündungsraum gebildet, während im übrigen Ringabschnitt des Wälzlagers nur ein geringer axialer Spalt zu dem Wandungsabschnitt gebildet ist. Dabei ist für eine gute Schmiermittelförderung vorgesehen, daß die axiale Erstreckung des Mündungsraums größer ist, als der axiale Spalt zwischen dem übrigen Ringabschnitt des Wälzlagers und der Gehäusewandung.

Die innere Mündung des Entlüftungskanals liegt nach einer günstigen Ausgestaltung zumindest teilweise zwischen dem größten Außendurchmesser des Wälzlagers und dem kleinsten Innendurchmesser des Wälzlagers. Auf diese Weise wird ein besonders gute Pumpwirkung durch die Drehbewegung des Wälzlagers und Ansaugung aus dem Mündungsbereich des Entlüftungskanals erreicht. Besonders günstig ist es, wenn die innere Mündung des Entlüftungskanals vollständig in dem radialen Bereich zwischen dem größten Außendurchmesser des Wälzlagers und dem kleinsten Innendurchmesser des Wälzlagers liegt.

Gemäß der Erfindung ist vorgesehen, daß das Wälzlager eine erste Mittelebene durch die Drehachse aufweist und daß die innere Mündung eine zweite Mittelebene aufweist, wobei die zweite Mittelebene gegenüber der ersten Mittelebene versetzt angeordnet ist. Dabei ist der Versatz so gewählt, daß in Vorzugsdrehrichtung des Wälzlagers die Pumpwirkung erhöht ist. Vorzugsweise ist die innere Mündung des Entlüftungskanals in Axialansicht auf das Wälzlager zumindest teilweise in einem Bereich angeordnet, in dem die Wälzkörper des Wälzlagers in Vorzugsdrehrichtung des Wälzlagers eine Bewegungskomponente nach vertikal unten haben. Auf diese Weise fördern die Wälzkörper des Wälzlagers bei der Rotation Schmiermittel aus dem Mündungsraum nach unten in den Innenraum der Baugruppe.

Nach einer bevorzugten Ausgestaltung weist die Entlüftungsanordnung einen Verschluß auf, der die obere Mündung des Entlüftungskanals verschließt. Vorzugsweise hat der Verschluß eine Labyrinthdichtung, durch welche Luft hindurchströmen kann. Ferner ist es günstig, wenn der Verschluß ein Einsteckteil mit einem Boden aufweist, das zumindest teilweise in dem Entlüftungskanal einsitzt, wobei in dem Einsteckteil zumindest ein seitlicher Durchbruch zum Durchtritt von Luft gebildet ist. Der Boden des Einsteckteils bildet dabei eine Barriere für bei Betrieb nach oben dringendes Schmiermittel. Um zu verhindern, daß Schmutz oder andere Partikel durch den Entlüftungskanal in die Baugruppe eindringen, weist der Verschluß einen abnehmbaren Deckel auf, der mit dem Einsteckteil lösbar verbindbar ist, insbesondere mittels einer Rastverbindung oder einer Schraubverbindung. Dabei besteht in vorteilhafter Weise auch die Möglichkeit, den Entlüftungskanal zum Befüllen der Baugruppe mit Schmiermittel zu verwenden. Hierfür muß lediglich der Deckel von dem Einsteckteil abgenommen werden. Dabei sind der Entlüftungskanal und die übrigen Querschnitte der Entlüftungsanordnung so gestaltet, daß entsprechend hohe Durchflußmengen erreicht werden, um die Befüllzeit der Baugruppe niedrig zu halten.

Die Lösung der obengenannten Aufgabe besteht weiter in einer Baugruppe in Form einer Getriebeanordnung, insbesondere zum Einsatz im Antriebsstrang eines Kraftfahrzeugs, umfassend ein Getriebegehäuse, das einen Innenraum einschließt und in dem zumindest zwei Antriebswellen zur Übertragung eines Drehmoments miteinander antriebsverbunden sind; wobei eine Entlüftungsanordnung nach einer der obengenannten Ausgestaltungen vorgesehen ist; wobei das Gehäuseteil der Entlüftungsanordnung Teil des Getriebegehäuses ist; wobei das drehende Bauteil eine der zumindest zwei Antriebswellen ist; und wobei der Entlüftungskanal zum Entlüften des Innenraums dient.

Diese Getriebeanordnung bietet die obengenannten Vorteile einer Verhinderung des Austritts von Schmiermittel aus dem Innenraum des Gehäuses bei gleichzeitig kompaktem Aufbau. Dabei wird die Pumpwirkung des Wälzlagers der Antriebswelle genutzt, um bei Rotation Schmiermittel aus dem Mündungsbereich nach unten bzw. in das Innere des Getriebegehäuses zu fördern. Auf diese Weise wird verhindert, daß Schmiermittel in ungewünschter Weise aus dem Innenraum des Getriebes nach außen gelangt. Insbesondere auch unter extremen Einsatzbedingungen der Getriebeanordnung, wie sie bei Längs- oder Querbeschleunigungen, wie sie beispielsweise im Rahmen von Neigungstest auftreten können, verhindert die erfindungsgemäße Getriebeanordnung wirkungsvoll das Austreten von Schmiermittel. Ein weiterer Aspekt ist, daß das im Entlüftungskanal befindliche Schmiermittel durch die rotierenden Teile des Wälzlagers einen Drall erfährt, welcher zu einer Reduktion der Schaumbildung des Schmiermittels im Mündungsbereich führt.

Die Getriebeanordnung ist vorzugsweise in Form eines Stufengetriebes, insbesondere ein zweistufiges Stirnradgetriebe, für einen Hybridantrieb gestaltet. Dabei wird das Stufengetriebe von einem Elektromotor angetrieben und überträgt Drehmoment über ein im Kraftfluß nachgelagertes Differentialgetriebe auf die rechte und linke Seitenwelle eines Kraftfahrzeugs. Es versteht sich jedoch, daß die Entlüftungsanordnung auch in einer beliebig anderen Baugruppe bzw. Getriebeanordnung zum Einsatz kommen kann, in denen drehende Bauteile mittels Wälzlagern gelagert sind. Besonders gut geeignet ist die Entlüftungsanordnung für Baugruppen, in denen die rotierenden Bauteile mit besonders hohen Drehzahlen laufen. Hier kann es nämlich zu einer erhöhten Schaumbildung kommen, die mit der erfindungsgemäßen Entlüftungsanordnung effektiv reduziert wird, so daß letztlich ein Austreten von Schmiermittel aus dem Gehäuse der Baugruppe vermieden wird.

Bevorzugte Ausführungsbeispiele werden nachstehend anhand der Zeichnungsfiguren beschrieben. Es zeigt
- Figur 1: eine erfindungsgemäße Entlüftungsanordnung in einer ersten Ausführungsform im Längsschnitt;
- Figur 2: die Entlüftungsanordnung aus Figur 1 im Querschnitt;
- Figur 3: eine erfindungsgemäße Entlüftungsanordnung in einer zweiten Ausführungsform im Längsschnitt;
- Figur 4: die Entlüftungsanordnung aus Figur 3 im Querschnitt;
- Figur 5: die Entlüftungsanordnung aus Figur 3 im Mantelschnitt durch das Wälzlager als Detail;
- Figur 6: das Gehäuseteil der Entlüftungsanordnung gemäß Figur 1 in einem Gehäuse einer Getriebeanordnung in leicht perspektivischer Darstellung von außen auf die Getriebeanordnung;
- Figur 7: die Getriebeanordnung aus Figur 6 im Längsschnitt durch die Entlüftungsanordnung;
- Figur 8: die Getriebeanordnung aus Figur 6 im Querschnitt durch die Entlüftungsanordnung, von innen betrachtet;
- Figur 9: die Getriebeanordnung nach Figur 6 im Horizontalschnitt durch die Entlüftungsanordnung.

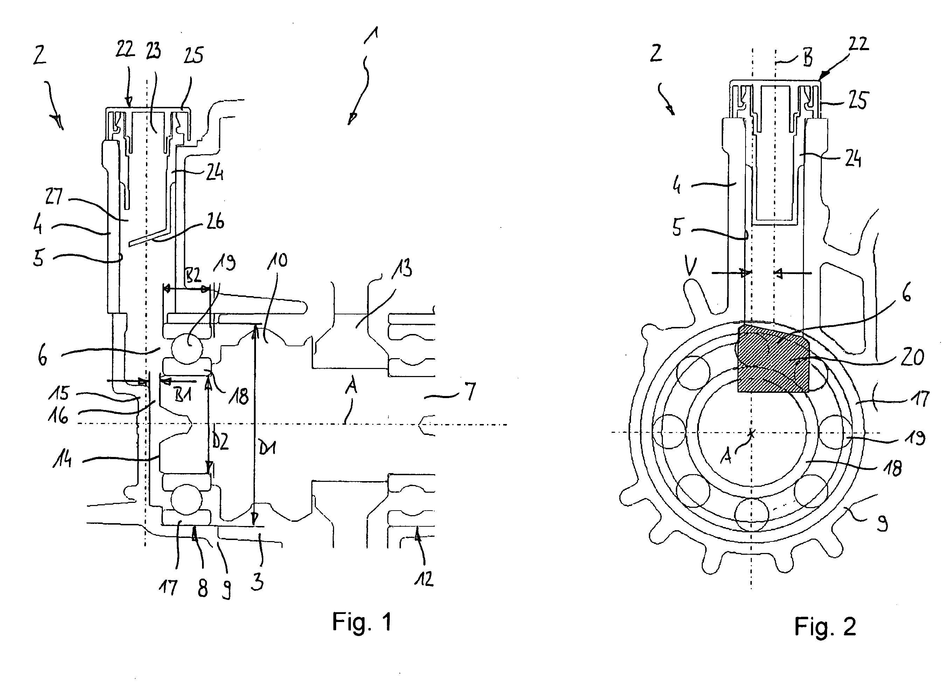

Die Figuren 1 und 2 werden im Folgenden gemeinsam beschrieben. Es ist eine Entlüftungsanordnung 2 für eine Baugruppe 1 gezeigt, die hier nur teilweise dargestellt ist. Die Entlüftungsanordnung 2 dient dazu, einen erhöhten Innendruck, der bei Betrieb der Baugruppe 1 entsteht, in die Atmosphäre abgeben zu können, wobei gleichzeitig ein Auslaufen von Schmiermittel bzw. ein Eindringen von Fremdstoffen in den Innenraum 3 der Baugruppe 1 vermieden werden soll.

Die Entlüftungsanordnung 2 umfaßt ein Gehäuseteil 4, in dem ein Entlüftungskanal 5 gebildet ist, der über eine Mündung 6 mit dem Innenraum 3 der Baugruppe 1 verbunden ist. Die Entlüftungsanordnung 2 umfaßt ferner ein drehendes Bauteil 7 mit einer Längsachse A, das mittels eines ersten Wälzlagers 8 und eins zweiten Wälzlagers 12 in einem Gehäuse 9 der Getriebeanordnung 1 drehbar gelagert ist.

Die Baugruppe 1 ist in Form einer Getriebeanordnung gestaltet, wobei das drehende Bauteil 7 eine Welle der Getriebeanordnung ist. Mit der Welle 7 ist ein schräg verzahntes Zahnrad 10 fest verbunden, das mit einem weiteren Zahnrad (nicht dargestellt) in Verzahnungsangriff ist. Am entgegengesetzt liegenden Ende der Welle 7 ist das zweite Wälzlager 12 vorgesehen, mit dem die Welle 7 gegenüber dem Gehäuse 9 drehbar gelagert ist. Es ist ferner die Nabe 13 eines weiteren Zahnrads erkennbar, das einen größeren Durchmesser aufweist als das erste Zahnrad 10 und zwischen dem ersten Zahnrad 10 und dem zweiten Wälzlager 12 angeordnet ist. Das zur Drehmomentübertragung dienende zweite Zahnrad ist mit einem weiteren Zahnrad im Verzahnungseingriff, das beispielsweise auf einer zur Welle 7 parallelen Welle (nicht dargestellt) angeordnet sein kann.

Es ist erkennbar, daß die zum Wälzlager 8 benachbarte Stirnseite 14 der Welle 7 einem Gehäuseabschnitt 15 des Gehäuses 9 gegenüberliegt. Dabei ist zwischen der Stirnseite 14 und dem Gehäuseabschnitt 15 ein axialer Spalt 16 gebildet, dessen Breite kleiner ist, als die axiale Breite und die radiale Erstreckung des Wälzlagers 8. Oberhalb des Spalts 16 ist der Mündungsraum 6 gebildet, wobei erkennbar ist, daß die axiale Breite des Mündungsraums, der zwischen dem Wälzlager 8 und dem Gehäuseteil 4 gebildet ist, größer ist als der Spalt 16. Das Gehäuseteil 4, welches den Entlüftungskanal 5 bildet, ist fest mit dem Gehäuse 9 verbunden, insbesondere einteilig mit diesem gestaltet. Dabei kann der Entlüftungskanal 5 beim Gießvorgang an das Gehäuse 9 angeformt werden.

Das Wälzlager 8 hat einen Lageraußenring 17, der in einem entsprechenden zylindrischen Lagerabschnitt 21 des Gehäuses 9 aufgenommen ist, einen Lagerinnenring 18, der auf einen entsprechenden zylindrischen Abschnitt der Welle 7 aufgeschoben ist, sowie eine Vielzahl von Kugeln 19, die in entsprechenden Rillen des Lageraußenrings 17 und des Lagerinnenrings 18 laufen. Das Wälzlager 8 ist vorliegend als Rillenkugellager gestaltet, wobei es sich versteht, daß auch andere Wälzlager eingesetzt werden können, beispielsweise ein Schrägkugellager oder Kegelrollenlager.

Es ist erkennbar, daß die Mündung 6 des Entlüftungskanals 5 in radialer Überdeckung mit dem Wälzlager 8 angeordnet ist. Hiermit ist gemeint, daß der Mündungsraum des Entlüftungskanals 5 mit dem Innenraum 3 eine Schnittfläche 20 bildet, die zumindest teilweise im Bereich des Wälzlagers 8 liegt. Durch diese Anordnung der Mündung 6 im Überdeckungsbereich zu dem Wälzlager 8 wird bei Rotation des Wälzlagers 8 Schmiermittel aus dem Mündungsraum 6 nach unten bzw. in das Innere 3 der Getriebeanordnung 1 gefördert. Die Schnittfläche 20 zwischen der Mündung 6 und der Ringfläche des Wälzlagers 8 ist in Figur 2 schraffiert gekennzeichnet. Die Form der Schnittfläche 20 wird als Überschneidung des Ringraums, welcher durch das Wälzlager 8 gebildet wird, mit dem Entlüftungskanal 5 gebildet. Für eine besonders gute Pumpwirkung ist es günstig, wie vorliegend der Fall, daß die innere Mündung 6 des Entlüftungskanals 5 vollständig in dem radialen Bereich zwischen dem größten Außendurchmesser D1 des Wälzlagers 8 und dem kleinsten Innendurchmesser D2 des Wälzlagers 8 liegt.

In Figur 2 ist erkennbar, daß der Entlüftungskanal 5 mit seiner Längsachse B seitlich versetzt zur Drehachse A des Wälzlagers 8 angeordnet ist, das heißt, die Längsachse B kreuzt die Drehachse A mit Abstand. Dieser Versatz V ist so gewählt, daß in Vorzugsdrehrichtung des Wälzlagers 8 die Pumpwirkung erhöht ist. Dabei ist die innere Mündung 6 des Entlüftungskanals 5 in Axialansicht auf das Wälzlager 8'zumindest teilweise in einem Bereich angeordnet, in dem die Wälzkörper 19 des Wälzlagers 8 in Vorzugsdrehrichtung des Wälzlagers 8 einer Bewegungskomponente nach vertikal unten haben. Auf diese Weise fördern die Wälzkörper 19 des Wälzlagers 8 bei der Rotation Schmiermittel aus dem Mündungsraum 6 nach unten in den Innenraum 3 der Getriebeanordnung 1.

Die Entlüftungsanordnung 2 weist ferner einen Verschluß 22 auf, der die obere Mündung 23 des Entlüftungskanals 5 verschließt. Der Verschluß 22 ist zweiteilig aufgebaut und umfaßt ein Einsteckteil 24, das in den Entlüftungskanal 5 eingesetzt ist und einen auf das Einsteckteil 24 lösbar verbundenen Deckel 25. Zwischen dem Einsteckteil 24 und dem Deckel 25 ist eine Labyrinthdichtung gebildet, welche verhindert, das Schmutz oder andere Partikel durch den Entlüftungskanal 5 in den Innenraum 3 gelangen. Die Verbindung zwischen dem Einsteckteil 24 und dem Deckel 25 ist über eine Rastverbindung hergestellt, wobei andere lösbare Verbindungsformen nicht ausgeschlossen sind. Das Einsteckteil 24 weist einen unteren Boden 26 auf, wobei in einem Mantelabschnitt des Einsteckteils 24 eine Öffnung 27 zum Entlüftungskanal 5 gebildet ist. Der abnehmbare Deckel 25 der Entlüftungsanordnung 2 erlaubt in vorteilhafter Weise, den Entlüftungskanal 5 auch zum Befüllen der Baugruppe mit Schmiermittel zu verwenden. Hierfür muß lediglich der Deckel 25 von dem Einsteckteil 24 abgenommen werden. Dabei ist insbesondere vorgesehen, daß der Entlüftungskanal 5 und die übrigen Querschnitte der Entlüftungsanordnung 2 so gestaltet sind, daß entsprechend hohe Durchflußmengen erreicht werden, um die Befüllzeit der Getriebeanordnung niedrig zu halten.

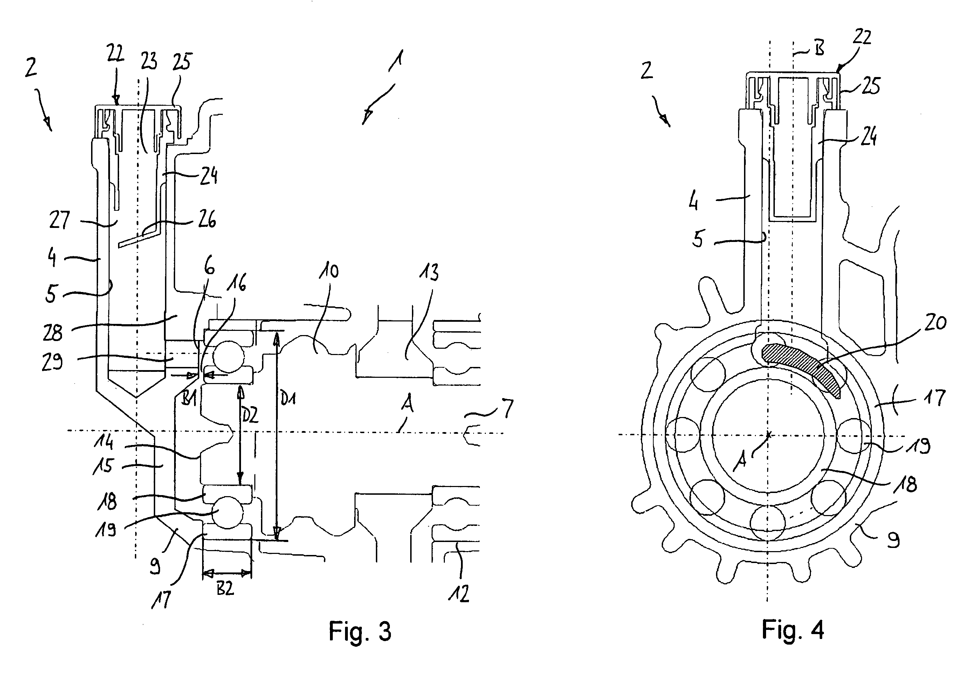

Die Figuren 3 bis 5, welche im Folgenden gemeinsam beschrieben werden, zeigen eine erfindungsgemäße Entlüftungsanordnung 2 in einer weiteren Ausführungsform. Diese entspricht der Ausführungsform gemäß den Figuren 1 und 2 weitestgehend, so daß hinsichtlich der Gemeinsamkeiten auf die obige Beschreibung Bezug genommen wird. Dabei sind gleiche bzw. abgewandelte Bauteile mit gleichen Bezugsziffern versehen. Im Folgenden wird schwerpunktmäßig auf die Unterschiede der vorliegenden Ausführungsform eingegangen.

Ein Unterschied der vorliegenden Ausführungsform liegt in der Ausgestaltung der Mündung 6 des Entlüftungskanals 5 in den Innenraum 3. Es ist insbesondere in Figur 3 erkennbar, daß der Entlüftungskanal 5 in Form einer Bohrung im Gehäuseteil 4 gestaltet ist. Axial in dem Bereich zwischen dem Wälzlager 8 und dem Entlüftungskanal 5 ist eine Zwischenwand 28 gebildet, in der eine Durchtrittsöffnung 29 vorgesehen ist, welche den Entlüftungskanal 5 mit dem Innenraum 3 verbindet. Dabei ist die Durchtrittsöffnung 29 in Bezug auf die Radialerstreckung des Wälzlagers 8 zwischen einem größten Außendurchmesser D1 des Lageraußenrings und einem kleinsten Innendurchmesser D2 des Lagerinnenrings angeordnet. Auf diese Weise kann das Wälzlager 8 bei Rotation der Welle 7 auf Grund der Pumpwirkung der Wälzkörper 19 besonders gut Schmiermittel aus dem Entlüftungskanal 5 in den Innenraum 3 fördern. Die Durchtrittsöffnung 29 kann beispielsweise beim Gießen durch einen entsprechenden in die Gießform einzusetzenden Kern gebildet werden.

Figur 4 zeigt die Schnittfläche 20 zwischen dem Mündungsraum 6 und dem Innenraum 3 im Bereich des Wälzlagers 8. Dabei ist erkennbar, daß sich die Schnittfläche 20 etwa sichelförmig in einem Ringabschnittsbereich des Wälzlagers erstreckt. Auch bei der vorliegenden Ausführungsform ist die Mündung 6 bzw. die Längsachse B des Entlüftungskanals 5 seitlich versetzt zur Drehachse A angeordnet. Auf diese Weise ist gewährleistet, daß die Wälzkörper 19 in Vorzugsdrehrichtung des Wälzlagers 8 eine Bewegungskomponente nach unten aufweisen. So wird bei Drehung des Wälzlagers 8 Schmiermittel aus dem Mündungsraum 6 weg in Drehrichtung des Wälzlagers 8 in den Innenraum 3 der Getriebeanordnung gefördert.

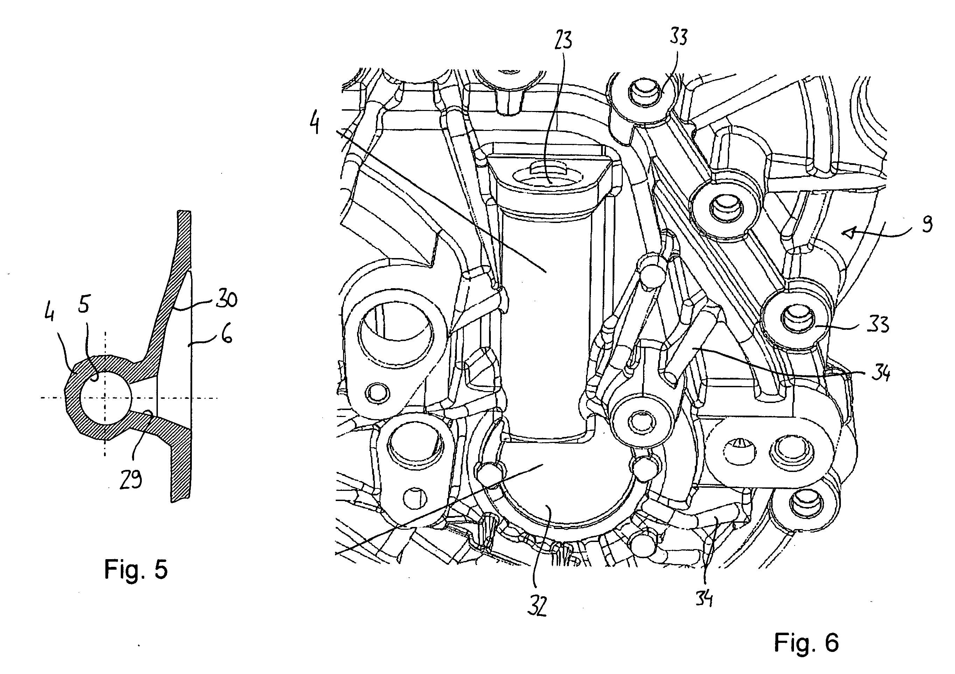

Wie insbesondere aus Figur 5 hervorgeht, schließt an den Durchtritt 29 ein Übergangsbereich 30 an, der sich in Umfangsrichtung des Wälzlagers über einen Ringabschnitt erstreckt. Der Übergangsbereich 30 und die Durchtrittsöffnung 29 haben konische Seitenwände, damit ein entsprechender Gießkern einfach von innen eingesetzt und nach dem Gießprozess entfernt werden kann.

Zwischen der Zwischenwandung 28 und dem Wälzlager 8 ist ein Axialspalt vorgesehen, dessen Breite B1 für eine besonders gute Pumpwirkung relativ klein ist. Dabei ist der Spalt kleiner als die axiale Breite B2 des Wälzlagers 8, vorzugsweise sogar kleiner als die Hälfte oder einem Viertel der axialen Breite B2 des Wälzlagers 8.

Die Figuren 6 bis 9 zeigen weitere Details der Form und Ausgestaltung der Entlüftungsanordnung 2 bzw. des Gehäuses 9 der Getriebeanordnung 1, wobei hier lediglich das Gehäuse 9 gezeigt ist, das heißt, die übrigen Bauteile, wie Wälzlager und Welle sind vorliegend nicht dargestellt.

Figur 6 zeigt das Gehäuseteil 4 des Gehäuses 9, welches eine zylindrische Form aufweist. Der zylindrische Gehäuseteil 4, in dem der Entlüftungskanal 5 gebildet ist, erstreckt sich nach unten, vorzugsweise in senkrechter Richtung, bis zum Lagerdeckel 32, hinter dem die Welle und das Wälzlager angeordnet sind. Es sind ferner verschiedene Verschraubungslöcher 33 zum Befestigen eines weiteren Gehäuseteils sowie Versteifungsrippen 34 des Gehäuses 9 erkennbar.

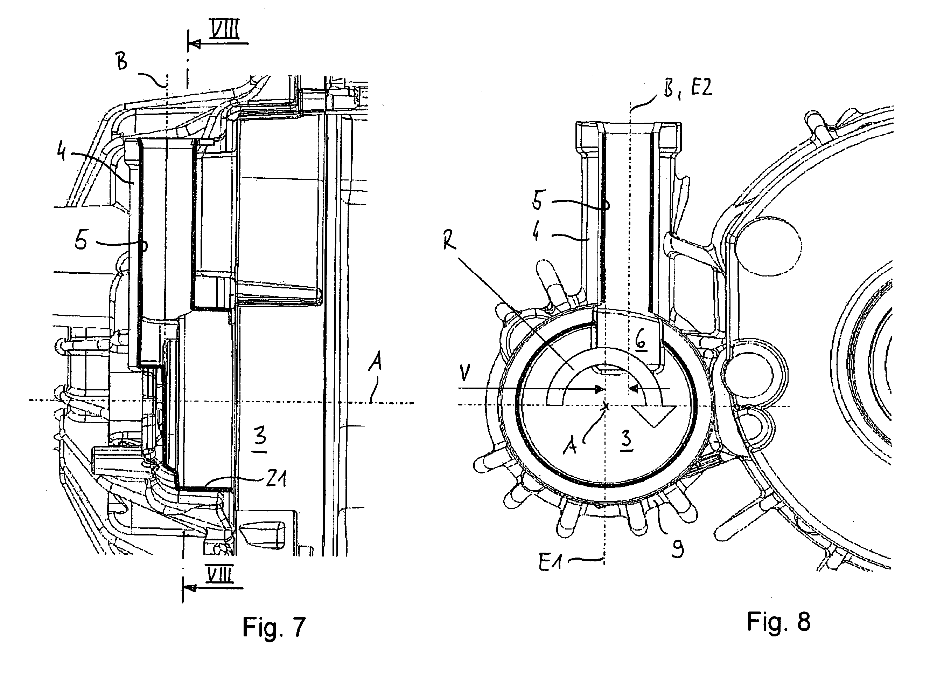

Die Darstellung in Figur 7 entspricht weitestgehend derjenigen gemäß Figur 1, wobei lediglich das Gehäuse 9 gezeigt ist. Dabei ist insbesondere die räumliche Überschneidung des Entlüftungskanals 5 mit dem Innenraum 3 im Bereich des zylindrischen Lagerabschnitts 21 für das Wälzlager erkennbar. Dabei sind der zylindrische Lagerabschnitt 21 für das Wälzlager 8 und der Entlüftungskanal 5 mit einer dicken, durchgezogenen Linie gezeichnet.

Figur 8 zeigt das Getriebegehäuse 9 gemäß Schnittlinie VIII - VIII aus Figur 7. Hier ist insbesondere der axiale Versatz V zwischen einer Mittelebene E1 durch die Drehachse A und die Längsachse B des Entlüftungskanals 5 zu erkennen. Dabei liegt die Längsachse B bzw. die Mittelebene E2 der Mündung 6 in Vorzugsdrehrichtung R so versetzt, daß die Wälzkörper 19 bei Rotation des Wälzlagers 8 in Vorzugsdrehrichtung R eine Bewegungskomponente nach unten bzw. von der Mündung 6 weg aufweisen. Durch diese Ausgestaltung ergibt sich, wie oben bereits erwähnt, eine besonders gute Pumpwirkung von Schmiermittel aus dem Entlüftungskanal 5 in den Innenraum 3 des Gehäuses 9.

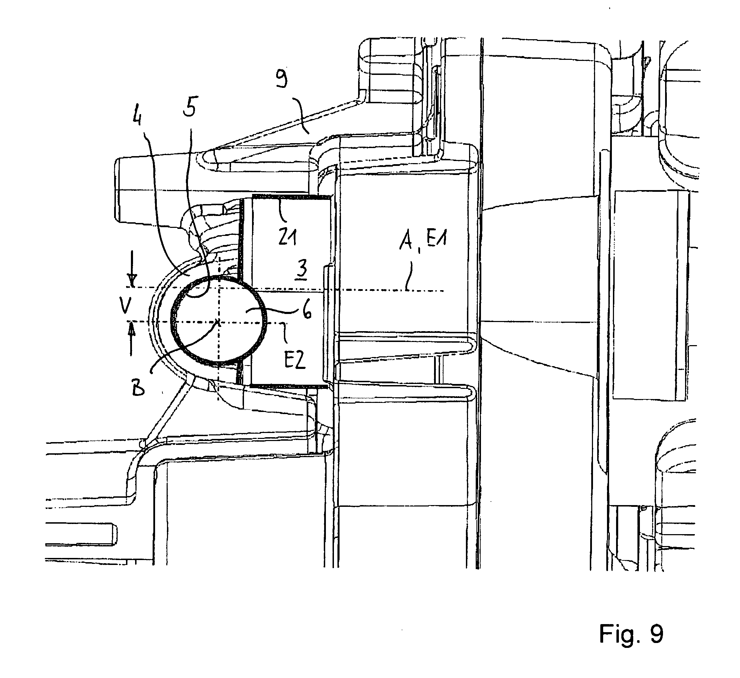

Figur 9 zeigt das Getriebegehäuse 9 im Horizontalschnitt, zumindest teilweise durch den Mündungsbereich 6, von unten betrachtet. Es ist die Drehachse A der Welle bzw. des Wälzlagers 8 erkennbar, sowie der Versatz V zwischen der Ebene E1 und einer parallelen ebene E2 durch die Längsachse B. Ferner ist wieder der zylindrische Abschnitt des Entlüftungskanals 5 sowie der zylindrische Lagerabschnitt 21 zum Lagern des Wälzlagers 8 im Innenraum 3 erkennbar und mit einer dicken Linie hervorgehoben. Der Zylinderraum des Entlüftungskanals 5 bildet mit dem Zylinderraum des Innenraums 3 eine Überschneidung, welche die Mündung 6 bildet, durch die bei Betrieb Schmiermittel aus dem Entlüftungskanal 5 in den Innenraum 3 des Gehäuses 9 einströmen kann. Durch den Achsversatz V der Mündung 6 gegenüber der Drehachse A wird eine besonders hohe Pumpwirkung erzielt.

Insgesamt bieten die erfindungsgemäßen Entlüftungsanordnungen 2 gemäß den Figuren 1, 2 und 6 bis 9 bzw. gemäß den Figuren 3 bis 5 den Vorteil, daß das Wälzlager 8, welches zur Lagerung der Welle 7 dient, dazu genutzt wird, eine Pumpwirkung aus dem Entlüftungskanal 5 in Richtung des Innenraums 3 des Getriebegehäuses 9 zu erzeugen. Auf diese Weise wird verhindert, daß bei Betrieb des Getriebes, insbesondere bei hohen Drehzahlen, Schmiermittel aus dem Innenraum 3 in die Umgebung gelangt.

Die erfindungsgemäßen Entlüftungsanordnungen 2 eignen sich für alle Aggregate, bei denen drehende Bauteile in Schmiermitteln laufen und mittels Wälzlagern gegenüber einem ortsfesten Bauteil um eine Drehachse drehbar gelagert sind. Bei solchen Aggregaten kann es insbesondere bei hohen Drehzahlen zu einer Schaumbildung kommen. Eine bevorzugte Anwendung sind Getriebe, deren Wellen bzw. Zahnräder mit besonders hohen Drehzahlen rotieren. Als Beispiel sei hier ein Hybridgetriebe für den Antrieb einer Achse eines Kraftfahrzeug genannt, wobei das Hybridgetriebe von einem Elektromotor angetrieben wird und ein nachgelagertes Differentialgetriebe aufweisen kann. Ein weiterer Anwendungsfall für die erfindungsgemäße Entlüftungsanordnung ist für ein Schaltgetriebe im Antriebsstrang eines Kraftfahrzeugs, oder ein Turbogetriebe. Es ist jedoch selbstverständlich auch denkbar, die erfindungsgemäße Entlüftungsanordnung für Industriegetriebe zu verwenden, bei denen Wälzlager zur Lagerung drehender Bauteile vorgesehen sind.

### Bezugszeichenliste

- 1: Getriebeanordnung
- 2: Entlüftungsanordnung
- 3: Innenraum
- 4: Gehäuseteil
- 5: Entlüftungskanal
- 6: Mündung
- 7: drehendes Bauteil
- 8: Wälzlager
- 9: Gehäuse
- 10: Zahnrad
- 12: Wälzlager
- 13: Zahnrad
- 14: Stirnfläche
- 15: Gehäuseabschnitt
- 16: Spalt
- 17: Lageraußenring
- 18: Lagerinnenring
- 19: Wälzkörper
- 20: Schnittfläche
- 21: Lagerabschnitt
- 22: Verschluß
- 23: Mündung
- 24: Einsteckteil
- 25: Deckel
- 26: Boden
- 27: Öffnung
- 28: Zwischenwandung
- 29: Durchtrittsöffnung
- 30: Übergangsabschnitt
- 32: Lagerdeckel
- 33: Gewindebohrungen
- 34: Versteifungsrippen

- A: Drehachse
- B: Längsachse
- E: Ebene
- R: Vorzugsdrehrichtung
- V: Versatz

## Patentansprüche

1. Entlüftungsanordnung für eine Baugruppe mit in Schmiermittel laufenden Bauteilen, umfassend
ein Gehäuseteil (4);
ein drehendes Bauteil (7), das mittels eines Wälzlagers (8) um eine Drehachse (A) gegenüber dem Gehäuseteil (4) drehbar gelagert ist; und
einen Entlüftungskanal (5) zum Entlüften der Baugruppe, wobei eine innere Mündung (6) des Entlüftungskanals (5) axial benachbart zum Wälzlager (8) angeordnet ist, und wobei die Mündung (6) des Entlüftungskanals (5) das Wälzlager (8) in Axialansicht zumindest teilweise überdeckt;
wobei das Wälzlager (8) eine vertikale erste Mittelebene (E1) durch die Drehachse (A) aufweist und wobei die innere Mündung (6) eine vertikale zweite Mittelebene (E2) aufweist, **dadurch gekennzeichnet, daß** die vertikale zweite Mittelebene (E2) gegenüber der vertikalen ersten Mittelebene (E1) des Wälzlagers (8) versetzt angeordnet ist.

2. Entlüftungsanordnung nach Anspruch 1,
**dadurch gekennzeichnet,**
**daß** der Entlüftungskanal (5) einen Entlüftungsraum bildet und daß die Baugruppe im Bereich des Wälzlagers (8) einen Lagerraum bildet, wobei sich der Entlüftungsraum und der Lagerraum überschneiden, so daß eine Durchtrittsöffnung gebildet ist. (Figuren 1 und 2)

3. Entlüftungsanordnung nach einem der Ansprüche 1 oder 2,
**dadurch gekennzeichnet,**
**daß** zwischen einer Stirnseite (14) des drehenden Bauteils (7) und einem Wandungsabschnitt (15) des Gehäuseteils (4) ein Spalt (16) gebildet ist, wobei die Breite des Spalts (16) kleiner ist als ein kleinster Durchmesser des Entlüftungskanals (5) im Bereich der Mündung (6).

4. Entlüftungsanordnung nach Anspruch 1,
**dadurch gekennzeichnet,**
**daß** der Entlüftungskanal (5) einen Entlüftungsraum bildet und daß die Baugruppe im Bereich des Wälzlagers (8) einen Lagerraum bildet, wobei zwischen dem Entlüftungsraum und dem Lagerraum eine Zwischenwand (28) angeordnet ist, wobei die Zwischenwand (28) eine Durchtrittsöffnung (29) aufweist. (Figuren 3 und 4)

5. Entlüftungsanordnung nach Anspruch 4,
**dadurch gekennzeichnet,**
**daß** zwischen dem Wälzlager (8) und der Zwischenwand (28) ein Spalt (16) gebildet ist, wobei die axiale Breite (B1) des Spalts (16) kleiner ist als eine radiale Erstreckung des Wälzlagers (8), insbesondere kleiner als ein zwischen dem Lagerinnenring und dem Lageraußenring gebildeter Ringspalt.

6. Entlüftungsanordnung nach einem der Ansprüche 4 oder 5,
**dadurch gekennzeichnet,**
**daß** sich die Durchtrittsöffnung (29) vom Entlüftungskanal (5) in Richtung Wälzlager (8) konisch erweitert.

7. Entlüftungsanordnung nach einem der Ansprüche 4 bis 6,
**dadurch gekennzeichnet,**
**daß** die Durchtrittsöffnung (29) im Übergangsabschnitt (30) zum Innenraum (3) eine Erstreckungskomponente in Umfangsrichtung aufweist.

8. Entlüftungsanordnung nach einem der Ansprüche 1 bis 7,
**dadurch gekennzeichnet,**
**daß** die innere Mündung (6) des Entlüftungskanals (5) zumindest teilweise zwischen dem größten Außendurchmesser (D1) des Wälzlagers (8) und dem kleinsten Innendurchmesser (D2) des Wälzlagers (8) angeordnet ist.

9. Entlüftungsanordnung nach einem der Ansprüche 1 bis 8,
**dadurch gekennzeichnet,**
**daß** die innere Mündung (6) des Entlüftungskanals (5) in Axialansicht auf das Wälzlager (8) zumindest teilweise in einem Bereich angeordnet ist, in dem die Wälzkörper (19) des Wälzlagers (8) in Vorzugsdrehrichtung (R) des Wälzlagers (8) eine Bewegungskomponente nach vertikal unten haben.

10. Entlüftungsanordnung nach einem der Ansprüche 1 bis 9,
**dadurch gekennzeichnet,**
**daß** das Gehäuseteil (4), das den Entlüftungskanal (5) bildet, zumindest teilweise an ein Gehäuse (9) der Baugruppe (1) angeformt ist, insbesondere einteilig mit dem Gehäuse (9) ausgebildet ist.

11. Entlüftungsanordnung nach einem der Ansprüche 1 bis 10,
**dadurch gekennzeichnet,**
**daß** der Entlüftungskanal (5) gegenüber einem Wandungsabschnitt (15) des Gehäuseteils (4), welcher der Stirnseite (14) des drehenden Bauteils (7) gegenüberliegt, nach außen zurückversetzt ist.

12. Entlüftungsanordnung nach einem der Ansprüche 1 bis 11,
**dadurch gekennzeichnet,**
**daß** ein Verschluß (22) vorgesehen ist, der eine äußere Mündung (23) des Entlüftungskanals (5) verschließt, wobei der Verschluß (22) insbesondere eine Labyrinthdichtung aufweist, durch welche Luft hindurchströmen kann.

13. Entlüftungsanordnung nach Anspruch 12,
**dadurch gekennzeichnet,**
**daß** der Verschluß (22) ein Einsteckteil (24) mit einem Boden (26) aufweist, das zumindest teilweise in dem Entlüftungskanal (5) einsitzt, wobei in dem Einsteckteil (24) zumindest ein seitlicher Durchbruch (27) zum Durchtritt von Luft gebildet ist, und daß der Verschluß (22) einen abnehmbaren Deckel (25) aufweist, der mit dem Einsteckteil (24) lösbar verbindbar ist, insbesondere mittels einer Rastverbindung.

14. Getriebeanordnung, insbesondere zum Einsatz im Antriebsstrang eines Kraftfahrzeugs, umfassend ein Getriebegehäuse (9), das einen Innenraum (3) bildet und in dem zumindest zwei Antriebswellen (7) zur Übertragung eines Drehmoments miteinander antriebsverbunden sind,
**gekennzeichnet durch** eine Entlüftungsanordnung (2) nach einem der Ansprüche 1 bis 13,
wobei das Gehäuseteil (4) der Entlüftungsanordnung (2) Teil des Getriebegehäuses (9) ist, wobei das drehende Bauteil (7) eine der zumindest zwei Antriebswellen ist, und wobei der Entlüftungskanal (5) zum Entlüften des Innenraums (3) dient.

15. Getriebeanordnung nach Anspruch 14,
**dadurch gekennzeichnet,**
**daß** die Getriebeanordnung ein Stufengetriebe für einen Hybridantrieb ist.

## Claims

1. A venting assembly for a unit with components running in a lubricant, comprising
a housing part (4);
a rotating component (7) which, by a rolling contact bearing (8), is rotatably supported around an axis of rotation (A) relative to the housing part (4); and
a venting channel (5) for venting the unit, wherein an inner opening (6) of the venting channel (5) is arranged so as to axially adjoin the rolling contact bearing (8) and wherein, in an axial view, the opening (6) of the venting channel (5) at least partially overlaps the rolling contact bearing (8);
wherein the rolling contact bearing (8) comprises a vertical first central plane (E1) comprising the axis of rotation (A) and wherein the inner opening (6) comprises a vertical second central plane (E2),
**characterized in**
**that** the vertical second central plane (E2) is arranged so as to be offset relative to the vertical first central plane (E1) of the rolling contact bearing (8).

2. A venting assembly according to claim 1,
**characterised in**
**that** the venting channel (5) forms a venting chamber and that, in the region of the rolling contact bearing (8), the unit forms a bearing chamber, wherein the venting chamber and the bearing chamber overlap, so that a through-opening is formed. (Figures 1 and 2)

3. A venting assembly according to any one of claims 1 or 2,
**characterised in**
**that** a gap (16) is formed between an end face (14) of the rotating component (7) and a wall portion (15) of the housing part (4), wherein the width of the gap (16) is smaller than the smallest diameter of the venting channel (5) in the region of the opening (6).

4. A venting assembly according to claim 1,
**characterised in**
**that** the venting channel (5) forms a venting chamber and that, in the region of the rolling contact bearing (8), the unit forms a bearing chamber, wherein an intermediate wall (28) is arranged between the venting chamber (5) and the bearing chamber, wherein the intermediate wall (28) comprises a through-opening (29). (Figures 3 and 4)

5. A venting assembly according to claim 4,
**characterised in**
**that** a gap (16) is formed between the rolling contact bearing (8) and the intermediate wall (28), wherein the axial width (B1) of the gap (16) is smaller than a radial extension of the rolling contact bearing (8), more particularly smaller than an annular gap formed between the inner bearing race and the outer bearing race.

6. A venting assembly according to any one of claims 4 or 5,
**characterised in**
**that** the through-opening (29) conically widens from the venting channel (5) towards the rolling contact bearing (8).

7. A venting assembly according to any one of claims 4 to 6,
**characterised in**
**that** the through-opening (29), in a transition portion (30) towards the interior (3), comprises an extension component in the circumferential direction.

8. A venting assembly according to any one of claims 1 to 7,
**characterised in**
**that** the inner opening (6) of the venting channel (5) is at least partially arranged between the greatest outer diameter (D1) of the rolling contact bearing (8) and the smallest inner diameter (D2) of the rolling contact bearing (8).

9. A venting assembly according to any one of claims 1 to 8,
**characterised in**
**that**, in an axial view of the rolling contact bearing (8), the inner opening (6) of the venting channel (5) is at least partially arranged in a region in which the rolling contact members (19) of the rolling contact bearing (8) comprise a vertically downwards directed movement component (8) in the preferential direction of rotation (R) of the rolling contact bearing (8).

10. A venting assembly according to any one of claims 1 to 9,
**characterised in**
**that** the housing part (4) which forms the venting channel (5) is at least partially formed on to a housing (9) of the unit (1), more particularly is formed so as to be integral with the housing (9).

11. A venting assembly according to any one of claims 1 to 10,
**characterised in**
**that** the venting channel (5) is set back towards the outside relative to a wall portion (15) of the housing part (4), which wall portion (15) is arranged vis-à-vis the end face (14) of the rotating component (7).

12. A venting assembly according to any one of claims 1 to 11,
**characterised in**
**that** a plug device (22) is provided which closes an outer opening (23) of the venting channel (5), wherein the plug device (22) comprises more particularly a labyrinth seal through which air can flow.

13. A venting assembly according to claim 12,
**characterised in**
**that** the plug device (22) comprises an insertable part (24) with a base (26), which insertable part (24) is positioned at least partially in the venting channel (5), wherein the insertable part (24) comprises at least one lateral aperture (27) to allow the passage of air, and that the plug device (22) comprises a removable cap (25) which is releasably connectable to the insertable part (24), more particularly by means of a snap-in connection.

14. A transmission assembly, more particularly for being used in the driveline of a motor vehicle, comprising a transmission housing (9) which forms an interior chamber (3) and in which at least two driveshafts (7) for transmitting torque are drivingly connected to one another,
**characterised by** a venting assembly (2) according to any one of claims 1 to 13,
wherein the housing part (4) of the venting assembly (2) forms part of the transmission housing (9), wherein the rotating component (7) is one of the at least two driveshafts, and wherein the venting channel (5) serves to vent the interior chamber (3).

15. A transmission assembly according to claim 14,
**characterised in**
**that** the transmission assembly is a multi-step transmission for a hybrid drive.

## Revendications

1. Agencement de purge d'air pour un sous-groupe contenant des pièces en mouvement dans un agent de lubrification, l'agencement comprenant
une pièce de carter (4);
une pièce rotative (7), qui est montée en rotation autour d'un axe de rotation (A) par rapport à la pièce de carter (4), au moyen d'un palier à roulement (8); et
un canal de purge d'air (5) pour purger le sous-groupe, une embouchure intérieure (6) du canal de purge d'air (5) étant agencée de manière axialement voisine du palier à roulement (8), et l'embouchure (6) du canal de purge d'air (5) chevauchant au moins partiellement le palier à roulement (8), en vue axiale;
agencement dans lequel le palier à roulement (8) présente un premier plan médian vertical (E1) passant par l'axe de rotation (A), et dans lequel l'embouchure intérieure (6) présente un deuxième plan médian vertical (E2),
**caractérisé en ce que** le deuxième plan médian vertical (E2) est agencé de manière décalée par rapport au premier plan médian vertical (E1) du palier à roulement (8).

2. Agencement de purge d'air selon la revendication 1, **caractérisé en ce que** le canal de purge d'air (5) forme une chambre de purge d'air, et **en ce que** le sous-groupe forme dans la zone du palier à roulement (8), une chambre de palier, la chambre de purge d'air formant une intersection réciproque avec la chambre de palier, de sorte qu'est réalisée une ouverture de passage. (Figures 1 et 2)

3. Agencement de purge d'air selon l'une des revendications 1 ou 2, **caractérisé en ce qu'**entre un côté frontal (14) de la pièce rotative (7) et un secteur de paroi (15) de la pièce de carter (4), est formé un interstice (16), la largeur de l'interstice (16) étant inférieure à un plus petit diamètre du canal de purge d'air (5) dans la zone de l'embouchure (6).

4. Agencement de purge d'air selon la revendication 1, **caractérisé en ce que** le canal de purge d'air (5) forme une chambre de purge d'air, et **en ce que** le sous-groupe forme dans la zone du palier à roulement (8), une chambre de palier, une paroi intermédiaire (28) étant agencée entre la chambre de purge d'air et la chambre de palier, et la paroi intermédiaire (28) présentant une ouverture de passage (29). (Figures 3 et 4)

5. Agencement de purge d'air selon la revendication 4, **caractérisé en ce qu'**entre le palier à roulement (8) et la paroi intermédiaire (28) est formé un interstice (16), la largeur axiale (B1) de l'interstice (16) étant inférieure à une étendue radiale du palier à roulement (8), notamment inférieure à un interstice annulaire formé entre la bague intérieure de roulement et la bague extérieure de roulement.

6. Agencement de purge d'air selon l'une des revendications 4 ou 5, **caractérisé en ce que** l'ouverture de passage (29) s'évase de manière conique à partir du canal de purge d'air (5) en direction du palier à roulement (8).

7. Agencement de purge d'air selon l'une des revendications 4 à 6, **caractérisé en ce que** l'ouverture de passage (29) présente, dans la zone de transition (30) vers l'espace intérieur (3), une composante d'étendue dans la direction périphérique.

8. Agencement de purge d'air selon l'une des revendications 1 à 7, **caractérisé en ce que** l'embouchure intérieure (6) du canal de purge d'air (5), est agencée, au moins en partie, entre le plus grand diamètre extérieur (D1) du palier à roulement (8) et le plus petit diamètre intérieur (D2) du palier à roulement (8).

9. Agencement de purge d'air selon l'une des revendications 1 à 8, **caractérisé en ce que** l'embouchure intérieure (6) du canal de purge d'air (5), en vue axiale sur le palier à roulement (8), est agencée au moins partiellement dans une zone dans laquelle les corps roulants (19) du palier à roulement (8), présentent, dans le sens de rotation préférentiel (R) du palier à roulement (8), une composante de mouvement verticale vers le bas.

10. Agencement de purge d'air selon l'une des revendications 1 à 9, **caractérisé en ce que** la partie de carter (4), qui forme le canal de purge d'air (5), est formée au moins partiellement sur un carter (9) du sous-groupe (1), et est notamment réalisée d'un seul tenant avec le carter (9).

11. Agencement de purge d'air selon l'une des revendications 1 à 10, **caractérisé en ce que** le canal de purge d'air (5) est en retrait vers l'extérieur par rapport à un secteur de paroi (15) de la pièce de carter (4), qui est en regard du côté frontal (14) de la pièce rotative (7).

12. Agencement de purge d'air selon l'une des revendications 1 à 11, **caractérisé en ce qu'**il est prévu un système de fermeture (22), qui ferme une embouchure extérieure (23) du canal de purge d'air (5), le système de fermeture (22) présentant notamment un joint d'étanchéité à labyrinthe à travers lequel peut s'écouler de l'air.

13. Agencement de purge d'air selon la revendication 12, **caractérisé en ce que** le système de fermeture (22) présente une partie à enficher (24) avec un fond (26), qui est au moins partiellement enchâssée dans le canal de purge d'air (5), au moins un passage latéral (27) destiné au passage d'air étant formé dans la partie à enficher (24), et **en ce que** le système de fermeture (22) comprend un couvercle (25) amovible, qui peut être relié de manière démontable à la partie à enficher (24), notamment au moyen d'une liaison par encliquetage.

14. Agencement de transmission, notamment destiné à être utilisé dans une ligne de transmission d'un véhicule automobile, comprenant un carter de transmission (9), qui forme un espace intérieur (3) et dans lequel sont reliés mutuellement en transmission, au moins deux arbres de transmission d'entraînement (7) pour transmettre un couple,
**caractérisé par** un agencement de purge d'air (2) selon l'une des revendications 1 à 13,
la partie de carter (4) de l'agencement de purge d'air (2) faisant partie du carter de transmission (9), la pièce rotative (7) étant l'un desdits au moins deux arbres de transmission d'entraînement, et le canal de purge d'air (5) servant à purger l'espace intérieur (3).

15. Agencement de transmission selon la revendication 14, **caractérisé en ce que** l'agencement de transmission est une transmission étagée pour un système d'entraînement hybride.
